(19)

Europäisches
Patentamt
European
Patent Office
Office européen
des brevets

(11) **EP 1 648 720 B1**

(12) **EUROPEAN PATENT SPECIFICATION**

(45) Date of publication and mention
of the grant of the patent:
**17.09.2008 Bulletin 2008/38**

(51) Int Cl.:
***B60C 15/06*** (2006.01)

(21) Application number: **03817931.3**

(86) International application number:
**PCT/EP2003/008193**

(22) Date of filing: **25.07.2003**

(87) International publication number:
**WO 2005/014309 (17.02.2005 Gazette 2005/07)**

(54) **PNEUMATIC TYRE HAVING A REINFORCED BEAD STRUCTURE**

LUFTREIFEN MIT VERSTÄRKTER WULSTSTRUKTUR

PNEUMATIQUE A STRUCTURE DE TALON RENFORCE

(84) Designated Contracting States:
**AT BE BG CH CY CZ DE DK EE ES FI FR GB GR
HU IE IT LI LU MC NL PT RO SE SI SK TR**

(43) Date of publication of application:
**26.04.2006 Bulletin 2006/17**

(73) Proprietor: **Pirelli Tyre S.p.A.**
**20126 Milano (IT)**

(72) Inventors:
• **DAGHINI, Guido Luigi**
**20126 Milano (IT)**

• **BIZZI, Stefano**
**20126 Milano (IT)**
• **RIVA, Guido**
**20126 Milano (IT)**

(74) Representative: **Giannesi, Pier Giovanni**
**Pirelli Pneumatici S.p.A.,**
**Viale Sarca, 222**
**20126 Milan (IT)**

(56) References cited:
**EP-A- 0 573 853        GB-A- 1 091 507
GB-A- 1 589 324        US-A- 3 638 705
US-A- 4 319 621        US-B2- 6 591 883**

**Description**

The present invention relates to a pneumatic tyre suitable for being used in four-wheeled and two-wheeled vehicles.

In particular, the present invention relates to high performance tyres such as, for example, tyres designed for high-powered cars or, more generally, tyres intended for applications involving high operating speeds (e g. higher than 200 km/h) and/or extreme driving conditions.

In more details, the present invention relates to "HP" (High Performance) or "UHP" (Ultra High Performance) tyres as well as to tyres suitable for being employed in sporting contests such as track motor races and rallies.

Moreover, the present invention relates to tyres for being use on Sports Utility Vehicles (SUV) which combine the characteristics of comfort and roominess typical of a station wagon with high performances (especially in terms of high torques and high speeds) typical of high-powered cars.

Furthermore, the present invention relates to tyres for two-wheeled vehicles, especially in case of racing applications or high-powered motor cycles.

More in particular, the present invention concerns an improved flipper structure to be employed in the bead area of a pneumatic tyre for four-wheeled and two-wheeled vehicles.

A tyre generally comprises: a carcass structure comprising at least one carcass ply, the ends of which are folded back or secured to two annular reinforcing elements, i.e. the so-called "bead cores"; a tread band; a belt structure placed between the carcass structure and the tread band; and a pair of sidewalls applied to said carcass structure in axially opposite positions.

The tyre portion which comprises the bead core is known as "bead" and performs the function of fixing the tyre on a respective rim.

Generally, in a position radially external to said bead core, the bead comprises a rubber strip, conventionally called "bead filling" or "bead apex", which has a substantially triangular cross-section and extends radially outwardly from the respective bead core.

High Performance and Ultra High Performance tyres as well as tyres for sports racing cars are generally provided with stiff sidewalls so as to withstand the relevant lateral thrusts which arise, for instance, during high speed cornering manoeuvres or in extreme driving conditions, e.g. while running at the limit of adherence.

A technical solution which can be used for improving the stiffness of the tyre sidewall consists in increasing the bead area by incrementing the bead height, i.e. the bead extension along the tyre sidewall.

However said solution does not provide the tyre sidewall with the stiffness degree which is required for the applications mentioned above since the stiffness obtainable from said bead is principally due to the mechanical properties of the bead filler rubber composition.

Furthermore, an excessive increase of the bead height negatively affects the ride comfort, thereby rendering the tyre particularly unsuitable for HP or UHP applications.

Moreover, in case a tyre is provided with a high bead (i.e. with a bead which remarkably extends along the tyre sidewall), the stresses originating inside of the tyre carcass can not be satisfactorily modulated along the profile thereof. Consequently, undesired zones of stress concentration in the bead area can arise which cause the formation of detachments between the carcass ply and the bead filler.

A further technical solution traditionally used for improving the stiffness of the tyre sidewall without incurring in the drawbacks mentioned above consists in providing the tyre bead with a reinforcing layer generally known as "flipper".

The flipper is a reinforcing layer which is wound around the respective bead core and bead filler so as to at least partially envelope them, said reinforcing layer being arranged between the carcass ply and the bead core/filler assembly. Usually the flipper is in contact with said carcass ply and bead assembly.

The flipper consists of a plurality of elongated reinforcing elements that are embedded in an elastomeric matrix, said reinforcing elements being made of textile materials (e.g. aramide or ryon) or of metallic materials (e.g. steel cord).

Furthermore, during running of the tyre the bead area undergoes cyclical flexures which give rise to heat buildup that can lead to separation of the mutually adjacent components present in this area, in particular of the carcass ply turnup ends from the adjacent structural elements of the tyre.

By providing the tyre bead with a flipper, the heat buildup mentioned above can be advantageously reduced and a thermal stability can be conferred to the tyre bead. This is principally due to the fact that any relative movements in the bead area is limited by the presence of the flipper which performs also the function of bead containment element.

Document US 2003/0034108 discloses a tyre which comprises a crown reinforcement surmounted by a tread, said tread being joined by means of two sidewalls to two beads, between which extends at least one carcass reinforcement ply, anchored within each bead by winding around an annular element, the tensile strength of which is less than the tensile strength of a bead wire of a conventional tyre of the same dimension, and an assembly of at least two bead reinforcement layers which are arranged in contact with the annular element and are composed of reinforcing elements which are parallel to each other within each layer and are crossed from one layer to the next, forming an angle $\alpha$ satisfying

the relationship $0° < \alpha \leq 15°$. According to said document the annular element has a tensile strength of between 3 and 5 times the tension imparted to the carcass reinforcement by the recommended inflation pressure, and the elongation at break of which is between 2 and 6%, all the bead reinforcement layers having a tensile strength of between 0.5 and 1 times the tensile strength of the annular element, and the total of the tensile strengths of the annular element and the assembly of the reinforcement layers being between 6 and 8 times the tension imparted to the carcass reinforcement. According to said document the bead reinforcement layers are formed of cables of aromatic polyamide.

Document US 2001/0018941 discloses a tyre, in particular a heavy-vehicle tyre, of height H on its rim, comprising at least one radial carcass reinforcement, formed of at least one ply of inextensible reinforcement elements and anchored in each bead to a bead wire to form an upturn, the end of which is located at a radial distance HRNC from the base D of the bead wire. Each bead is reinforced by at least two additional reinforcement armatures: a) at least one first armature which is formed of radial metallic reinforcement elements, and b) at least one second armature which is formed of metallic elements that form, with the circumferential direction, an angle $\alpha$ such that $0° \leq \alpha \leq 45°$. Viewed in meridian section, the first reinforcement armature is formed of at least one ply of inextensible elements which is wound around the anchoring bead wire of the carcass reinforcement on the inside of said carcass reinforcement to form two strands. The axially inner strand, which is located between the radially lower end A of its radially upper edge adjacent to the carcass reinforcement and its point of tangency T to the anchoring bead wire, follows a rectilinear trace AT, referred to as "shortest-path", and its radially upper end is radially located at a distance HLI from the base D of the bead wire of between 0.216 and 0.432 times the height H. The axially outer strand, which is located axially to the inside of the upturn of the carcass reinforcement, has its radially upper end radially closer to the axis of rotation than the end of the carcass reinforcement upturn and the distance HLE between said end of the base D of the bead wire is between 0.2 and 0.8 times the height HRNC of the upturn of the carcass reinforcement. The second armature of elements is inclined relative to the radial direction is not wound around the anchoring bead wire and is arranged axially to the outside of the upturn of the carcass reinforcement. The metallic reinforcement elements of said first and second armatures are formed of radial metal cords or cables.

Document US 4,319,621 discloses a tyre showing the features of the preamble of claim 1.

The Applicant has perceived that, in high speed and in sports racing applications, there is the need for a pneumatic tyre which is able to withstand the relevant stresses - in particular lateral stresses - originating from high speed and/or extreme driving conditions, such as severe manoeuvres which are typically carried out in track races or rallies.

In particular, the Applicant has perceived the necessity for a pneumatic tyre which is provided with a reinforced bead suitable for ensuring the desired structural strength which is needed for the applications mentioned above without negatively affecting the handling of the tyre.

Furthermore, the Applicant has noticed that any structural changes in the tyre bead area, in order to decrease the tyre rolling resistance by reducing stresses and strains in said area, generally increase the stiffness of the bead structure meanwhile causing the ride comfort characteristics to considerably decrease.

Therefore, the Applicant's efforts have been focused on modifying the tyre bead area, in particular the flipper, in order to obtain the desired structural strength mentioned above in combination with a flexibility degree which ensures handling and ride comfort characteristics.

The Applicant has found that said results can be achieved by providing the tyre bead with a flipper whose elongated reinforcing elements are metallic and comprise preformed threadlike elements of small diameter in the range from 0.05 mm to 0.25 mm.

According to the present invention, each elongated reinforcing element of the flipper is a metallic cord comprising a plurality (i.e. at least two) of threadlike elements, at least one of said threadlike elements being preformed.

In the present description the term "elongated preformed reinforcing element" is used to indicate a reinforcing element comprising at least one preformed threadlike element.

The Applicant has found that high mechanical resistance properties are conferred to the flipper by the presence of metallic reinforcing elements, while high flexibility characteristics are obtained by preforming at least one threadlike element of small diameter of the elongated reinforcing elements, said high flexibility being typical of a reinforcing fabric made from a textile material.

Therefore, the Applicant has found that by employing elongated preformed metallic elements of small diameter as flipper reinforcing elements it is possible to obtain a flipper which has a high strength which is typical of a semifinished product comprising metallic reinforcing elements, and a high flexibility which is typical of a semifinished product comprising textile reinforcing elements.

The Applicant has found that the above combination is very important for the flipper.

In fact, since the flipper is used to increase the stiffness of the bead area, it is important to provide the tyre bead with a semifinished product whose strength is sufficiently high to ensure that such a result can be advantageously achieved.

Furthermore, it is also very important to confer to the flipper a good flexibility so that, during the tyre manufacturing process, the application of the flipper can be easily and correctly carried out and the flipper accurately follows the external profile of the bead core/filler assembly.

In fact, if the flipper is too stiff and can not be correctly wound around the bead core and the bead filler, some air may remain entrapped between the bead core/filler assembly and the flipper. The presence of air, and thus of oxygen, which can come into contact with the flipper metallic reinforcing elements, has to be avoided since undesired corrosion phenomena can take place within the tyre bead.

Furthermore, the flexibility of the flipper is advantageous also from a process point of view since: a) the flipper manufacturing process can be carried out by using the same machinery for calendering and cutting steps normally employed for textile materials; b) the step of application of the flipper in the tyre manufacturing process is carried out very easily since the step of turning up the flipper around the bead core/filler assembly is promoted by the flexibility of the flipper.

The Applicant has also found that the flexibility of the flipper according to the invention positively promotes the side (lateral) grip of the tyre, especially in case of tyres for high power cars or motor cycles.

Generally, the lateral grip of car tyres is more pronounced on the driving wheels, especially on rear-wheel drive cars provided with high power engines, said cars usually having low-section tyres, very large and stiff, with footprint areas which are narrow in the circumferential direction and wide in the axial direction of the tyre, in order to ensure high performances, especially on dry roadways.

A lack of lateral grip adversely affects the traction power on leaving a bend, giving rise to loss of grip of the rear axle of the car, as well as negatively affects the lateral stability of the car when extreme driving conditions are performed, e.g. during sports track racings or rallies.

Furthermore, Sports Utility Vehicles (SUV), which are considerably increasing their presence in the car market, generally need a lateral grip which is even higher than that required by cars provided with high power engines. This is due to the fact that high performances, and sometimes very high performances (especially on asphalted roads), have to be provided to vehicles which have big volumes and whose center of gravity is high with respect to the road surface.

As far as a two-wheeled vehicle is concerned, a lack of lateral grip negatively affects the lateral stability of the vehicle especially when a bend is performed by the driver, in particular at high speeds.

As mentioned above, according to the present invention the diameter of the preformed metallic threadlike elements of the flipper is selected to be small, e.g. in the range from 0.05 mm to 0.25 mm.

In fact the Applicant has found that the use of fine (i.e. with small diameters) preformed metallic threadlike elements as reinforcing elements for the flipper allows to decrease the flipper weight and to increase the flipper flexibility, thereby achieving the advantages mentioned above.

Moreover, the Applicant has found that the flipper according to the present invention has a green tackiness which is greater than that of flippers known in the art, e.g. of flippers whose reinforcing elements are made from metallic or textile materials.

The green tackiness of the flipper indicates the adhesion degree between the green rubber compound and the metallic threadlike elements forming the flipper.

Consequently, when the flipper is handled during the application thereof in the tyre manufacturing process, the flipper can be stretched, particularly in a direction transversal to the metallic threadlike elements without running the risk of separation of the reinforcing elements from the green rubber.

Such a separation has to be avoided since it can give rise to corrosion phenomena or to the formation of critical areas inside of the tyre bead wherein metallic elements, devoid of the rubber coating, can protrude from the bead, a defect that can cause the tyre to be discarded.

Furthermore, the Applicant has found that the flipper of the present invention shows a very good adhesion of the cured rubber composition to the metallic threadlike element, even after aging (said aspect contributing to avoid the formation of corrosion phenomena), and a remarkable mutual compenetration of the preformed threadlike elements of the cord (or of the non-preformed threadlike elements into the preformed threadlike elements in case the cord is made of preformed and non-preformed threadlike elements) so that undesired phenomena, such as fraying out of the cord end or curling of the cord end portion, do not occur when the cutting of the cord is performed.

The present invention concerns a pneumatic tyre comprising the features of claim 1.

In a further embodiment, each elongated reinforcing element is a metallic cord the threadlike elements of which are all preformed. Prior to undergoing a given preforming action, the threadlike elements have a straight configuration.

Preferably, the deformations of the preformed threadlike elements are of the coplanar type. Namely each preformed threadlike element lies in a plane.

Preferably, said threadlike elements are preformed so that they assume a wave-shaped configuration so that they are substantially devoid of sharp edges and/or discontinuities in curvature along their longitudinal extension. Said feature is particularly advantageous since the absence of said sharp edges/corners results in a favourable increasing of the breaking load of the threadlike elements.

Particularly preferred is a preforming according to substantially sinusoidal undulations. Preferably, said sinusoidal undulations have a wavelength of between 2.5 mm and 30 mm, and more preferably between 5 mm and 25 mm.

Preferably, said sinusoidal undulations have a wave amplitude of between 0.12 mm and 1 mm. The wavelength and wave amplitude ranges referred to above may be measured directly on the non-rubberized threadlike element before it is inserted into the tyre or on the finished (vulcanized) tyre. Advantageously, the measurement of said parameters may be performed on the threadlike element by using a magnifying lens and a graduated scale (for example a graduated ruler). In the case where a finished (or vulcanized) tyre is to be analysed, it is necessary to extract the flipper from the tyre and to remove the rubberizing compound therefrom by using suitable solvents, for example by treating it with dichlorobenzene at 100°C for at least 12 hours.

In an alternative embodiment, the deformation has a form which is not of the coplanar type, but for example of the helical type.

In order to obtain a preformed threadlike element according to the present invention, it is possible to use any one of the methods known in the sector. For example, it is possible to use toothed-wheel devices of the type illustrated in US-5,581,990 or to use the device described in patent application WO 00/39385, in the name of the same Applicant. Said device comprises a pair of pulleys, each provided with a plurality of facing lugs able to intermesh with each other over a predefined section so as to induce simultaneously an axial deformation and a flexural deformation in a threadlike element made to travel along the space lying between the lugs of the first pulley and the corresponding lugs of the second pulley. The abovementioned intermeshing action may be effected as a result of the movement of said pair of pulleys driven rotationally by said threadlike element.

Preferably, the elongated reinforcing elements are substantially equally distributed in the flipper, i.e. the axial spacing between consecutive adjacent single elongated reinforcing element is substantially constant.

As mentioned above, the flipper is arranged between the radially external carcass ply and the bead core/filler assembly, and it is wound around the bead core so as to envelope, at least partially, the bead core and the bead filler.

In more details, the flipper can be considered to be formed by a central portion, which is contact with the respective bead core, and two leg portions, which extend from the respective ends of the central portion and engage the bead filler.

In the present description, the term "external flipper end" is used to indicate the flipper end which belongs to the axially external leg portion of the flipper, while the term "internal flipper end" is used to indicate the flipper end which belongs to the axially internal leg portion of the flipper.

According to the present invention, preferably, the flipper ends are offset (staggered) from each other so that one end is more extended in the direction of the tyre sidewall than the other end.

Therefore, two different solutions can be obtained: a) the case in which an internal offset is performed, i.e. the internal leg portion of the flipper is more extended than the external leg portion, and b) the case in which an external offset is performed, i.e. the external leg portion of the flipper is more extended than the internal leg portion.

Moreover, the Applicant has found that the preformed, metallic, threadlike elements which are used in the flipper according to the present invention possess a wide elastic range and a high elongation at break also after vulcanization of the tyre has occured.

This aspect is particularly advantageous since the tyre of the present invention presents a cyclic fatigue strength which is higher than that of a tyre provided with a flipper of the prior art.

According to a further aspect of the present invention, the tyre bead comprises a further reinforcing layer which is generally known with the term of "chafer" and which has the fuction of increasing the bead stiffness.

The chafer comprises a plurality of elongated reinforcing elements which are embedded in an elastomeric matrix and which are generally made of textile materials (e.g. aramide or ryon) or metallic materials (e.g. steel cord).

According to the present invention, the chafer is provided with metallic elongated reinforcing elements which comprise preformed threadlike elements of small diameter, as described above with reference to the flipper.

The chafer can be located in a plurality of positions inside of the tyre bead and/or sidewall.

Preferably, the chafer is located between the flipper and the carcass ply. According to said embodiment, the chafer can be positioned in correspondence of the flipper internal leg portion. Alternatively, the chafer can be positioned in correspondence of the flipper external leg portion.

Alternatively, the chafer is located in a position axially external with respect to the carcass ply, thus extending in proximity of the flipper external leg portion. According to a further embodiment, the chafer is located in a position axially internal with respect to the carcass ply, thus extending in proximity of the flipper internal leg portion.

In case the tyre is provided with two carcass plies, the chafer can be positioned between said carcass plies. Preferably, the chafer is located between the carcass plies in proximity of the flipper internal leg portion. Alternatively, the chafer is located between the carcass plies in proximity of the flipper external leg portion.

Alternatively, the chafer is located in a position axially external with respect to the carcass plies, thus extending in proximity of the flipper external leg portion. According to a further embodiment, the chafer is located in a position axially internal with respect to the carcass plies, thus extending in proximity of the flipper internal leg portion.

Preferably, the chafer starts in correspondence of the radially external portion of the bead core, it follows the perimetral profile of the bead filler and ends in correspondence of the tyre sidewall.

Alternatively, the chafer can extend along the tyre sidewall, up to the ends of the tyre belt structure.

Further features and advantages will appear more clearly with reference to the detailed description of an example of a tyre according to the present invention. Said description, given hereinbelow, refers to the accompanying drawings which are provided solely by way of a non-limiting example and in which:

- Figure 1 shows a partial cross-sectional view of a car tyre according to the present invention;
- Figure 2 shows a preformed threadlike element which can be used in a flipper according to the present invention;
- Figure 3 shows a partial cross-sectional view of a motor cycle tyre according to the present invention;
- Figure 4 shows a partial cross-sectional view of a car tyre provided with a chafer according to the present invention;
- Figure 5 shows a partial cross-sectional view of a car tyre provided with a chafer according to a further embodiment of the present invention;
- Figures 6 to 12 show a comparison of the results obtained from tests carried out on a tyre of the invention and on a comparative tyre respectively.

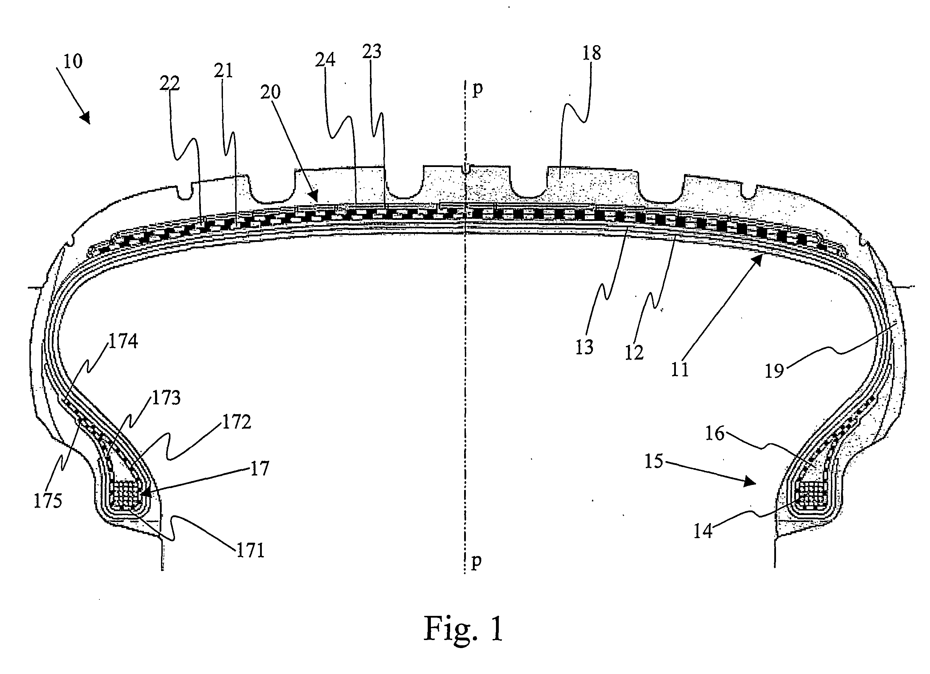

Fig. 1 shows a partial cross-sectional view of a car tyre 10 according to the invention and suitable for being mounted on a rim (not shown).

The tyre 10 includes a carcass structure 11 comprising two carcass plies 12, 13 the ends of which are associated with a pair of bead cores 14.

In accordance with the embodiment shown in Figure 1, the carcass plies 12, 13 are associated with the respective bead cores 14 by turning up the carcass plies ends around the bead cores 14.

The bead cores 14 are axially spaced from each other and are incorporated in respective beads 15, in a position radially internal to said tyre.

In addition to the bead core 14, the bead 15 comprises a bead filler 16, in a position radially external to the bead core 14, and a flipper 17.

According to the embodiment of Figure 1, the flipper 17 is wound around the bead core 14 and the bead filler 16 and completely envelopes the bead core/filler assembly. In fact, the flipper 17 is arranged between the radially external carcass ply 13 and the bead core/filler assembly and directly contacts the external carcass ply and the bead assembly.

According to the embodiment of Figure 1, the flipper 17 is formed of a central portion 171, which is contact with the respective bead core 14, and two leg portions 172, 173, which extend from the respective ends of the central portion 171 and engage the bead filler 16.

In particuar, the internal leg portion 172 is provided with the internal flipper end 174, and the external leg portion 173 is provided with the external flipper end 175.

According to the embodiment of Figure 1, an internal offset of the flipper ends is performed since the internal leg portion 172 of the flipper 17 is more extended than the external leg portion 173, and - as clearly shown in the tyre cross-section view - the internal flipper end 174 reaches a height in the tyre sidewall which is greater than the height of the external flipper end 175.

Preferably, the carcass is of the radial type and namely incorporates reinforcing cords arranged in a direction substantially perpendicular to the equatorial plane p-p of the tyre.

The tyre 10 comprises, moreover, a tread band 18, located on the crown of said carcass 11, and a pair of axially opposite sidewalls 19, each arranged between the respective bead 15 and the tread band 18.

Between the carcass ply 11 and the tread band 18, the tyre 10 comprises, moreover, a belt structure 20 which, in the example shown in Figure 1, envisages two radially superimposed belt plies 21, 22 and two reinforcing layers 23, 24.

In detail, the belt plies 21, 22, which are radially superimposed on each other, incorporate a plurality of reinforcing cords, which are typically metallic and obliquely oriented with respect to the equatorial plane p-p of the tyre, parallel with each other in each ply and intersecting with those of the adjacent ply so as to form a predetermined angle with respect to a circumferential direction.

The reinforcing layers 23, 24, which are radially external to said pair of belt plies 21, 22, possess reinforcing elements (not shown in the figure) which are substantially parallel to each other and parallel to the equatorial plane p-p of the tyre, namely such as to form an angle which is substantially zero (said reinforcing layers 23, 24 are also defined as 0° layers) with a circumferential direction of the tyre.

Generally, in a car tyre, said reinforcing elements are of the textile type.

In the case of tubeless tyres, in a position radially internal to said carcass ply 11, a rubberized layer, the so-called "liner" (not shown in Figure 1), is also envisaged, said layer being able to provide the tyre 10, during use, with the necessary impermeability to air.

The bead core 14 shown in Figure 1 is of the "Alderfer" type with a cross-section which has a symmetrical and geometrically regular form, typically of a substantially quadrangular type.

The "Alderfer" structure of the bead core has a configuration of the type "m x n", where "m" indicates the number of axially adjacent threadlike elements or cords (obtained by stranding at least one pair of threadlike elements) and "n" indicates the number of radially superimposed layers of said threadlike elements (or said cords).

The bead core structure can also be the so-called "single-thread bead core". This is formed from a single rubberized threadlike element (or single cord) which is wound spirally so as to form a first layer of axially adjacent turns; then, in a position radially external to said first layer, the same threadlike element (or the same cord) is further coiled so as to form a second layer in a position radially external to the first layer, and so on, so as to form several radially superimposed layers, each layer being able to have a number of turns different from that of the layers radially adjacent thereto.

The so-called "round cable" bead cores can also be used. This type of bead core has a central core, for example obtained from a single threadlike element which is welded end-to-end so as to form a circle, around which a threadlike element is spirally wound and finally joined to itself.

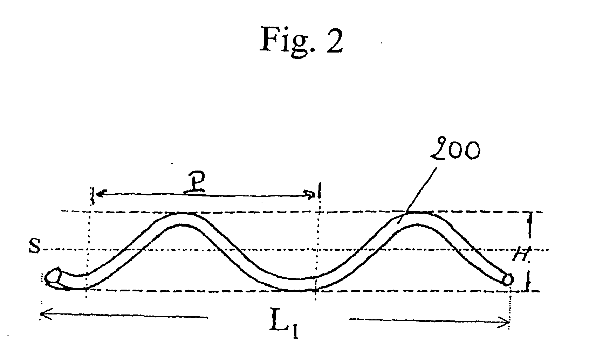

Fig. 2 shows a threadlike element 200 which is sinusoidally preformed in accordance with the present invention.

As mentioned above, said deformations, generally in the form of periodic deviations from a straight line, may be obtained in any known form. Preferably, said deformations are of the coplanar type. Even more preferably, said deformations consist of substantially sinusoidal undulations (such as those illustrated in Fig. 2) having a wavelength (or pitch) P and a wave amplitude H.

For the purposes of the present invention, "wavelength P" is to be understood as the length of the minimum section which is repeated periodically, and "wave amplitude H" is to be understood as meaning twice the amplitude of maximum transverse deviation (assumed to be equal in both directions) of the threadlike element from the centre axis S (see Fig. 2).

As mentioned above, preferably, the wavelength (or pitch) P is between 2.5 mm and 30 mm, more preferably between 5 mm and 25 mm.

Preferably, the wave amplitude H is between 0.12 mm and 1 mm, more preferably between 0.14 mm and 0.60 mm.

Generally, the preformed threadlike elements according to the present invention have a diameter D of between 0.05 mm and 0.25 mm, preferably between 0.08 mm and 0.20 mm. Particularly preferred is a diameter of 0.12 mm.

As mentioned above, the threadlike elements are metallic.

Preferably, the threadlike elements are made of steel. In the case where the diameter of the threadlike element is between 0.4 mm and 0.1 mm, the breaking strength of a standard NT (normal tensile) steel ranges between about 2,600 N/mm$^2$ (or 2,600 MPa - MegaPascal) and about 3,200 N/mm$^2$, the breaking strength of a HT (High Tensile) steel ranges between about 3,000 N/mm$^2$ and about 3,600 N/mm$^2$, the breaking strength of a SHT (Super High Tensile) steel ranges between about 3,300 N/mm$^2$ and about 3,900 N/mm$^2$, the breaking strength of a UHT (Ultra High Tensile) steel ranges between about 3,600 N/mm$^2$ and about 4,200 N/mm$^2$. Said breaking strength values depend in particular on the quantity of carbon contained in the steel.

Generally, said threadlike elements are provided with a brass coating (Cu of between 60% and 75% by weight, Zn of between 40% and 25% by weight), having a thickness of between 0.10 $\mu$m and 0.50 $\mu$m. Said coating ensures better adhesion of the threadlike element to the rubberizing compound and provides for protection against corrosion of the metal, both during production of the tyre and during use thereof. Should it be necessary to ensure a greater degree of protection against corrosion, said threadlike elements may be advantageously provided with an anti-corrosive coating other than brass, able to ensure a greater corrosion resistance, such as, for example, a coating based on zinc, zinc/manganese (ZnMn) alloys, zinc/cobalt (ZnCo) alloys or zinc/cobalt/manganese (ZnCoMn) alloys.

Alternatively, the threadlike element is made of aluminium or an aluminium alloy.

Preferably the flipper according to the present invention is obtained by using cords having a structure of the type n x D, where n is the number of threadlike elements forming the cord and D is the diameter of each threadlike element. Preferably n ranges between 2 and 5. Particularly preferred is n equal to three.

Preferably, the stranding pitch of said cord ranges between 2.5 mm and 25 mm, more preferably between 6 mm and 18 mm. Particularly preferred is a stranding pitch of 12.5 mm.

Preferred cord constructions are, for example: 2x (i.e. two threadlike elements twisted together), 3x, 4x, 5x, 2+1 (i.e. one strand of two threadlike elements and one strand of one threadlike element, said two strands being twisted together), 2+2, 3+2, 1+4.

Preferably, the density of the elongated reinforcing elements in the flipper according to the present invention is comprised between 40 cords/dm and 160 cords/dm, more preferably is comprised between 80 cords/dm and 120 cords/dm. Particularly preferred are densities of 85 cords/dm and 105 cords/dm.

Preferably, the elongated reinforcing elements of the flipper according to the present invention are obliquely oriented with respect to a radial plane of the tyre.

Preferably, said elongated reinforcing elements are disposed at an angle relative to a radial plane of the tyre in the range of 15° to 60°, more preferably 30° to 45°.

The Applicant has noticed that the closest is the angle of the reinforcing elements of the flipper to the angle of the reinforcing elements of the carcass plies, the greatest is the stiffness which can be conferred to the flipper, but the lowest is the transmission to the tyre of the torque provided by the engine. Therefore, the angle of the reinforcing elements of the flipper has to be selected by taking into account the necessity of achieving a compromise between said two different technical aspects.

Preferably, the thickness of the flipper - i.e. the total thickness including the diameter of the cord and the rubber compound into which the cord is embedded - is comprised between 0.5 ($\pm$ 0.1) mm and 1.7 ($\pm$ 0.1) mm, more preferably between 0.8 ($\pm$ 0.1) mm and 1.1 ($\pm$ 0.1) mm.

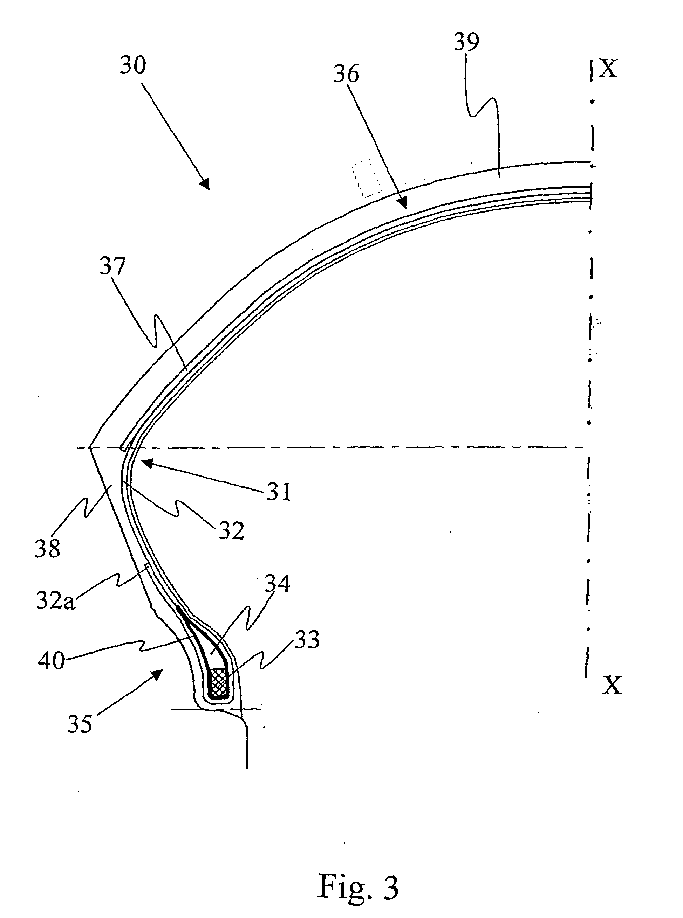

Figure 3 shows a partial cross-sectional view of a motor cycle tyre 30 according to the invention and suitable for being mounted on a rim (not shown).

The tyre 30 comprises a carcass structure 31 comprising at least one carcass ply 32, the opposite lateral edges 32a of which are associated with respective bead cores 33.

According to Figure 3, the association between the carcass ply 32 and the bead cores 33 is obtained by folding back the opposite lateral edges 32a of the carcass ply 32 around the bead cores 33.

The carcass ply 32 generally consists of a plurality of reinforcing cords arranged parallel to each other and at least partially coated with a layer of elastomeric material. These reinforcing cords are usually made of textile fibres, for example rayon, nylon, polyethylene naphthalene-2,6-dicarboxylate (PEN), polyethylene terephthalate (PET), or of steel wires stranded together, coated with a metal alloy (for example copper/zinc, zinc/manganese, zinc/molybdenum/cobalt alloys and the like).

According to a preferred embodiment, the carcass structure 31 is of radial type, i.e. the carcass ply 32 incorporates reinforcing cords arranged in a substantially perpendicular direction relative to a circumferential direction.

Alternatively, the carcass structure 31 comprises a couple of radially inner and radially outer carcass plies (not shown in Figure 3). In this case, the reinforcing cords are essentially parallel to one another and oriented according to inclined directions in each ply and opposed with respect to the cords of the adjacent ply with respect to the equatorial plane X-X of the tyre.

An elastomeric filler 34 - the bead filler - is applied radially external to the bead cores 33 in order to fill the space defined between the carcass ply 32 and the corresponding turnups thereof.

As known, the tyre area comprising the bead core 33 and the bead filler 34 forms the so-called tyre bead 35 intended for anchoring the tyre 30 onto a corresponding mounting rim (not shown in Figure 3).

A belt structure 36 is applied along the circumference of the carcass structure 31.

According to the embodiment of Figure 3, the belt structure 36 comprises only one reinforcing layer 37 including a plurality of circumferential coils, axially arranged side by side, of a rubberized cord or of a strip of a few rubberized cords (preferably 2 to 5), spirally wound at substantially-null angle on the crown of the carcass structure 31. Said circumferential coils are substantially oriented according to the rolling direction of the tyre.

Preferably, the circumferential coils are wound on the carcass structure 31 according to variable pitch so as to obtain, preferably, a reinforcing layer thickness higher at opposite side portions that in the central portion of the belt structure 36.

Even though the spiralling by itself and any pitch variability involve a winding angle different from zero, this angle remains so small that it may substantially be considered as always equal to zero degree.

Usually the cords of said reinforcing layer 37 are textile or metal cords. Preferably, said cords are steel cords, more preferably high elongation (HE) steel cords.

Preferably, said cords are made of high-carbon (HT) steel wires, i.e. steel wires with a carbon content higher than 0.9%.

When textile cords are used, they may be nylon, rayon, polyethylene naphthalene-2,6-dicarboxylate (PEN), polyethylene terephthalate (PET), Kevlar®. Alternatively, hybrid cords may be used, constituted by at least one low modulus yarn (e.g. nylon or rayon) twisted with at least one high modulus yarn (e.g. aramide fibres such as, for example, Kevlar®).

Different techniques for winding the cords around the carcass are well known in the art such as disclosed, for example, in the European Patent EP 461 646.

The belt structure 36 can also comprise two radially superimposed belt plies (not shown) which incorporate a plurality of reinforcing cords (e.g. aramidic cords) that are obliquely oriented with respect to the equatorial plane X-X of the tyre, parallel with each other in each ply and intersecting with those of the adjacent ply so as to form a predetermined angle with respect to a circumferential direction.

A side wall 38 is also applied externally onto the carcass ply 32, this side wall extending, in an axially external position, from the bead 35 to the end of the belt structure 36.

A tread band 39, whose lateral edges are connected to the side walls 38, is applied circumferentially in a position radially external to the belt structure 36. The tread band 39 has a rolling surface designed to come into contact with the ground by means of grooves of various shape so as to define a plurality of blocks of various shapes and sizes distributed over the rolling surface.

In case a tubeless tyre is concerned, a rubber layer (not shown in Figure 3), generally known as a "liner", may also be provided in a radially internal position relative to the carcass ply 32 in order to provide the tyre 30 with the necessary impermeability to the inflation air.

According to the embodiment of Figure 3, the tyre 30 is provided with a flipper 40 which is wound around the bead core 33 and the bead filler 34.

According to said embodiment, the flipper 40 is arranged between the carcass ply 32 and the bead core/filler assembly and directly contacts said structural components of the tyre.

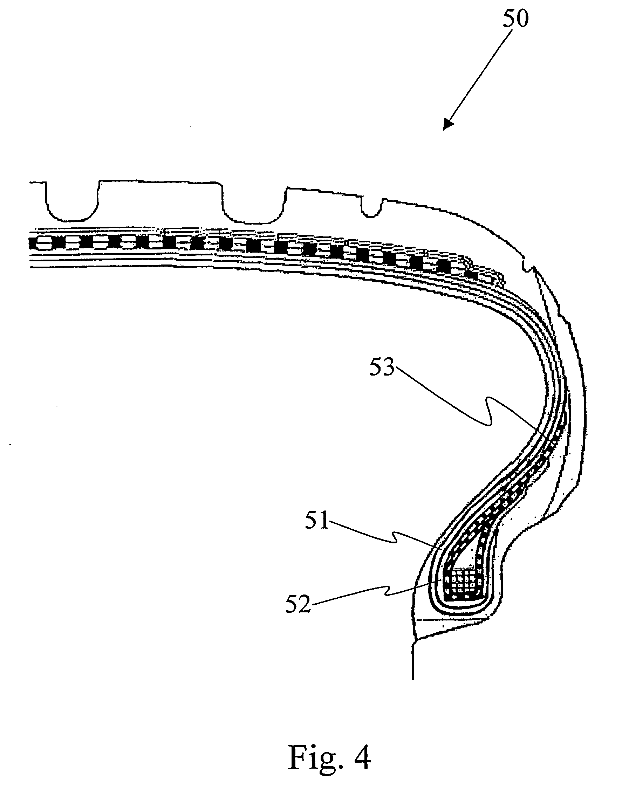

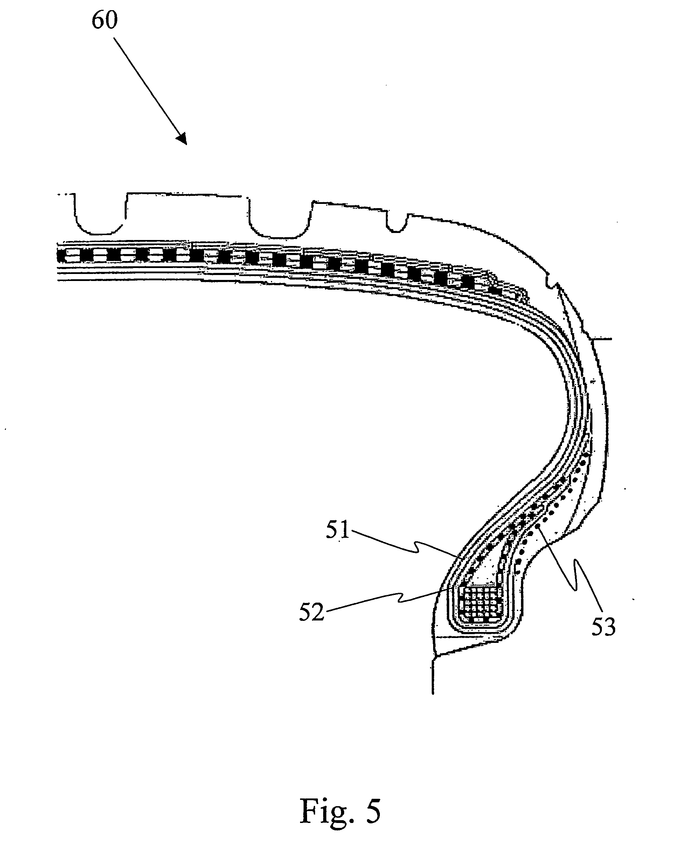

For simplicity of description, in Figures 4 and 5 only the tyre components which are different from the components of the tyre shown in Figure 1 have been indicated. Therefore, the components of Figures 4 and 5 which are similar or identical with respect to those of Figure 1 will be addressed to in the description with the same reference signs.

Figure 4 shows a partial cross-sectional view of a car tyre provided with a chafer according to the present invention.

The tyre 50 of Figure 4 comprises two carcass plies 51, 52 and a chafer 53 is positioned between them. In more details, the chafer 53 is located between the carcass plies 51, 52 in proximity of the flipper internal leg portion 172.

According to the embodiment of Figure 4, the chafer 53 starts in correspondence of the radially external bead core portion and extends along the tyre sidewall ending in a position radially external to the internal flipper end 174.

Figure 5 shows a partial cross-sectional view of a car tyre provided with a chafer according to a further embodiment of the present invention.

According to said embodiment, the chafer 53 is located in a position axially external with respect to the turnup ends of the carcass plies 51, 52.

In more details, the chafer 53 is located axially external to the second carcass ply 52, i.e. to the radially external carcass ply 52, and extends in proximity of the flipper external leg portion 173.

According to the embodiment of Figure 5, the chafer 53 starts in correspondence of the radially external bead core portion and extends along the tyre sidewall ending in a position radially external to the internal flipper end 174.

As far as the chafer is concerned, che number of thread-like elements in the cord, the diameter of the thread-like elements, the pitch of the cord, the characteristics of the preformed thread-like elements (i.e. wave amplitude, wave length), the cord constructions, the densities can be chosen in the ranges given above with reference to the flipper.

Preferably, the elongated reinforcing elements of the chafer according to the present invention are obliquely oriented with respect to the longitudinal direction of the flipper and are disposed at an angle relative to a radial plane of the tyre in the range of 15° to 70°, more preferably 20° to 60°.

Preferably, the chafer of the present invention is particularly suitable for "HP" (High Performance) or "UHP" (Ultra High Performance) car tyres, i.e. for car tyres belonging to Classes "H" and "V" (maximum speed over 210 Km/h) and to Classes "W" and "Y" (maximum speed over 240 Km/h). Furthermore, the present invention is suitable for car tyres whose maximum speed is over 300 km/h.

Preferably, the car tyre of the invention has a H/C ratio, of the height of the right cross-section to the maximum width of the section, ranging between 0.65 and 2.0. Preferably, the car tyre of the present invention is a tyre having very low cross-section, e.g. with a ratio H/C of between 0.25 and 0.65, preferably from 0.25 and 0.45.

For further description of the invention, some illustrative examples are given below.

EXAMPLE 1

In order to show the flexibility of the elongated reinforcing elements of the flipper according to the present invention, the Applicant measured the "Taber Stiffness" (according to BISFA - E8 Determination of Taber stiffness - International agreed methods for testing steel tyre cord - Edition 1995) of two elongated reinforcing elements of the invention and two comparative elongated reinforcing elements.

The stiffness values reported in Table 1 are an average value of five test sessions.

The lower is the value, the more flexible is the cord.

Table 1

| CORD | TABER STIFFNESS (TSU - Taber Stiffness Units) |
|---|---|
| CORD 1 (invention) | 0.74 |
| CORD 2 (invention) | 7.14 |
| CORD 3 (comparative) | 0.98 |
| CORD 4 (comparative) | 7.70 |

In details:

- CORD 1 was a 3x0.12 HT cord (i.e. a cord which was obtained by twisting together three wires having a diameter of 0.12 mm and made of HT steel); the three wires were all preformed according to a substantially sinusoidal undulation having a wavelength (pitch) of 2.200 mm and a wave amplitude of 0.345 mm;
- CORD 2 was a 3x0.175 HT cord (i.e. a cord which was obtained by twisting together three wires having a diameter of 0.175 mm and made of HT steel); the three wires were all preformed according to a substantially sinusoidal undulation having a wavelength (pitch) of 2.200 mm and a wave amplitude of 0.345 mm;
- CORD 3 was analogous to CORD 1, the only difference being that the three wires of CORD 3 were not preformed;
- CORD 4 was analogous to CORD 2, the only difference being that the three wires of CORD 4 were not preformed.

It can be noted that the elongated reinforcing elements comprising preformed wires show a stiffness which is remarkably greater than that of elongated reinforcing elements having analogous cord constructions the wires of which are not preformed.

EXAMPLE 2

Two tyres A and B, having size 285/35 R19, were manufactured.

Tyres A and B had identical structural elements, i.e. identical carcass (one carcass ply), crossed belt plies, 0° belt layer )positioned radially external to the crossed belt plies), bead cores (Alderfer 5x5, each wire having a diameter of 0.89 mm and baing made of HT steel) and tread band.

Tyre A (tyre according to the invention) further comprised a flipper whose elongated reinforcing elements comprised a steel cord formed of preformed metallic threadlike elements.

In more details, each elongated reinforcing element consisted of a 3x0.12 HT steel cord (i.e. a cord formed of three HT steel wires having a diameter of 0.12 mm). Each wire of the cord was preformed according to a substantially sinusoidal undulation having a wavelength (pitch) of 2.200 mm and a wave amplitude of 0.345 mm.

The elongated reinforcing elements in the flipper were disposed at an angle, relative to a radial plane of the tyre, of about 45°.

The density of the elongated reinforcing elements in the flipper was of 85 cords/dm and the thickness of the flipper - i.e. the total thickness including the diameter of the cord and the rubber compound into which the cord was embedded - was of about 0.95 mm.

In the tyre A of the present invention, the flipper was provided with the internal leg portion more extended than the external leg portion.

Tyre B (comparative) further comprised a flipper whose elongated reinforcing elements comprised a cord formed of two aramidic fiber filaments. The filaments had a count (in dTex - this measure unit is the weight in grams corresponding to 10,000 m of fiber) of 1,840 and a twist of 50 (in tpm - turn per meter). The cord twist was of 50 (in tpm).

The elongated reinforcing elements in the flipper of tyre B were disposed at an angle, relative to a radial plane of the tyre, of about 45°.

The density of the elongated reinforcing elements in the flipper of tyre B was of 110 cords/dm and the thickness of the flipper of tyre B - i.e. the total thickness including the diameter of the cord and the rubber compound into which the cord was embedded - was of about 1 mm.

In tyre B the flipper was provided with the internal leg portion more extended than the external leg portion.

Indoor and outdoor testings were carried out on the tyres A and B.

Indoor testings

a) High speed fatigue stress test

The tyre was subjected to an overload of 160% with respect to the tyre load capacity and then rotated against a road wheel at a fixed and controlled speed of 120 km/h. The tyre pressure of about 2.6 bar. The test was carried out mounting the tyre on the rim and the latter on the machine axle. The test was stopped when the tyre came to a failure.

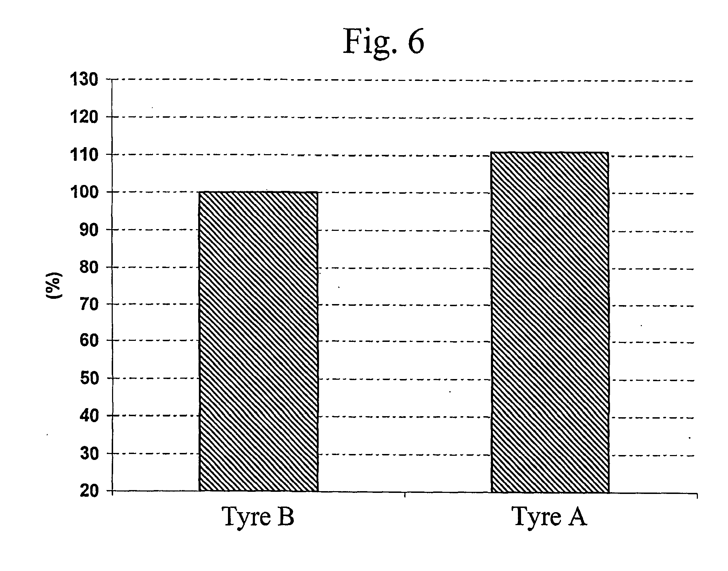

The results are summarized in Figure 6 from which it can be pointed out that the result of the fatigue stress at high speed is incremented of more than 10% for the tyre A of the invention with respect to the comparative tyre B.

b) High speed durability

The tyre was rotated against a road wheel at increasing speeds. In more details, the road wheel was rotated at 240 km/h for 1 hour and successively the speed was incremented of 10 km/h every ten minutes. The test was stopped when the failure of the tyre occured, said failure being due, for instance, to breakage of the cords, chunkings, tearing of a block, carcass plies detachment, belt plies detachment, blister formation.

Pressure and load values applied to the tyre depend on the Load Index and the Speed Index of the tyre, and thus on the size thereof. Before a failure occured, the last step speed of tyre A was 330 km/h for a time period of 5 minutes, while the last step speed of tyre B was 320 km/h for a time period of 4 minutes.

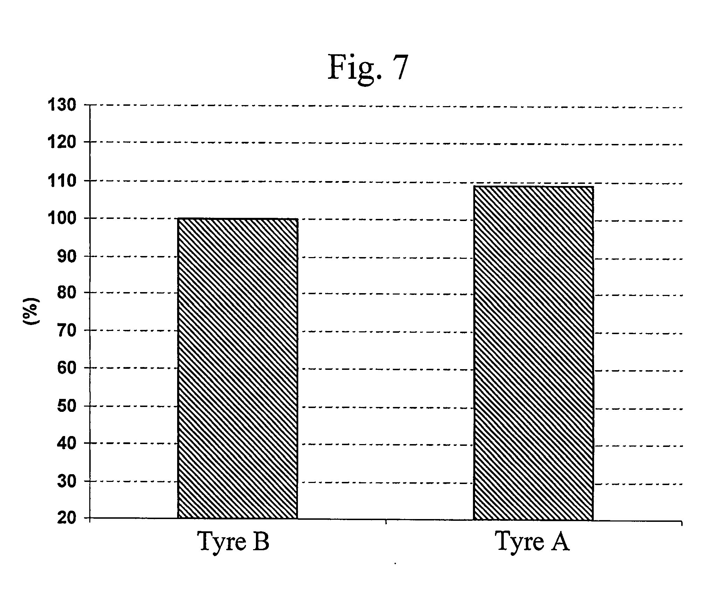

The results are summarized in Figure 7 from which it can be pointed out that the result of the high speed durability is incremented of about 10% for the tyre A of the invention with respect to the comparative tyre B.

c) Indoor bump test

The tyre, loaded with the nominal operating load, was rotated against a road wheel mounted with a vertical axis of rotation and rotating at a speed in the range from 150 km/h to 0 km/h. The road wheel carried on its radially outer surface a bar of parallelepipedal shape of predetermined dimensions which forms the bump. The tyre was fitted on a fixed dynamometer hub which measured the excitation (force at the hub) that the bump produced on the tyre.

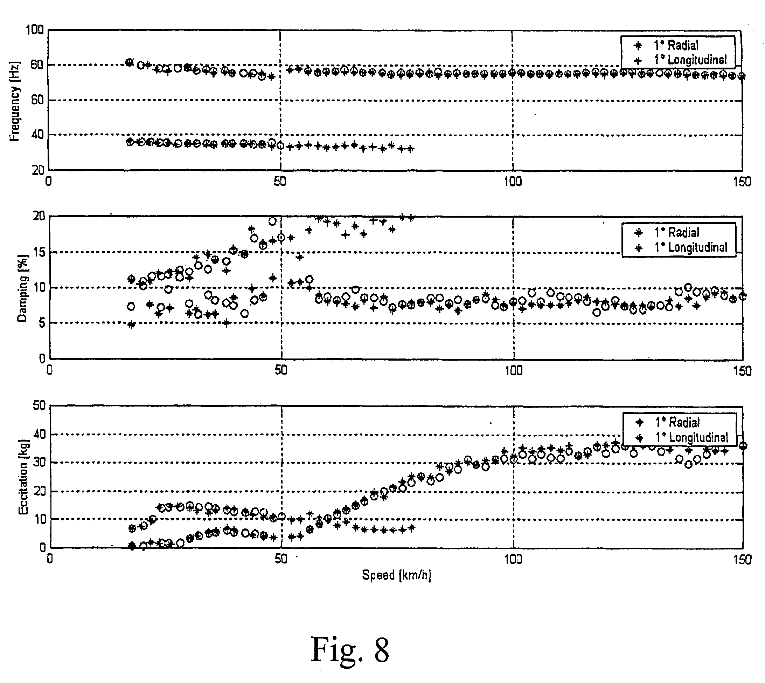

As shown in Figure 8, the test measured the frequency (Hz), the damping (%) and the eccitation (kg), as a function of speed (km/h), of the radial and longitudinal components of the force at the hub during the passage of the tyre on the bump. In more details, Figure 8 shows how said measurements referring to tyre A (indicated with stars) substantially fit the measurements referring to tyre B (indicated with rings).

d) Comfort: vertical stiffness

The tyre was positioned on a wheel hub and was tested in a static condition, i.e. it was not caused to rotate. The starting tyre pressure was of about 1.6 bar and progressively the tyre pressure was incremented of about 0.2 bar to reach a final value of about 2.8 bar. The starting load applied on the wheel hub was the vehicle load; successively said load was incremented by an overload which was progressively increased from 0 kg to 1,500 kg. The test consisted in measuring the flattening caused on the tyre while applying a load, i.e. the test evaluated the resistance offered by the tyre to the applied load. The vertical stiffness is the resistance of the tyre to deformations in a direction along the radius of the wheel. Said parameter is associated to the tyre comfort and, generally, a high vertical stiffness corresponds to a harsh and uncomfortable ride. An ideal tyre should thus have high lateral stiffness to confer lateral grip and, at the same time, low vertical stiffness to absorb road irregularities.

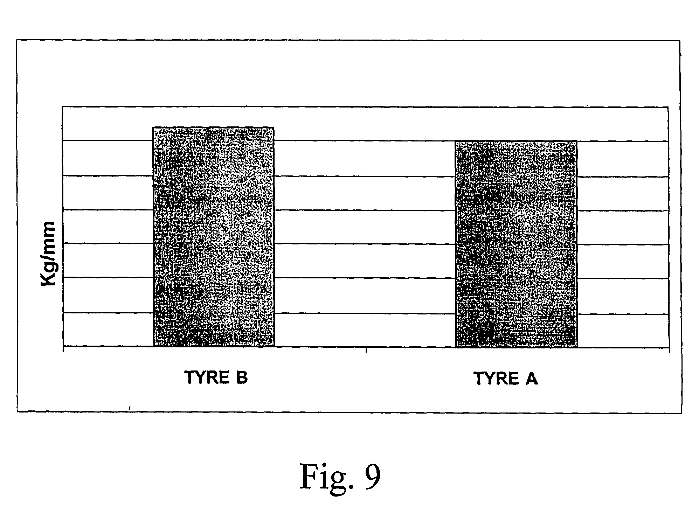

Figure 9 shows the vertical stiffness (measured in kg/mm) of tyre A (invention) and tyre B (comparative). According to Figure 9, the two tyres had substantially the same vertical stiffness, thus the comfort of tyre A was comparable with the comfort of tyre B.

e) Slip rigidity

The tyre was mounted on a wheel hub and was rotated against a road wheel having an axis of rotation parallel to the tyre rotation axis. The tyre was rotated at a speed of 100 km/h and a slip angle was applied. The starting slip angle was equal to 0° and it was progressively incremented of $\pm$ 1° according to a sinusoidal curve of frequence of about 1 Hz. The test was carried out at different vertical loads (from 150 kg to 750 kg) while keeping the tyre to its nominal inflating pressure. A computerized system was provided to acquire the values of the measured parameters (slip force, self-aligning torque) during the test.

The slip rigidity kd depends on the rigidity of the tyre structure ks and on the rigidity of the tyre tread kb according to the following mathematical expression:

$$\frac{1}{kd} \equiv \frac{1}{ks} + \frac{1}{kb} \qquad (1)$$

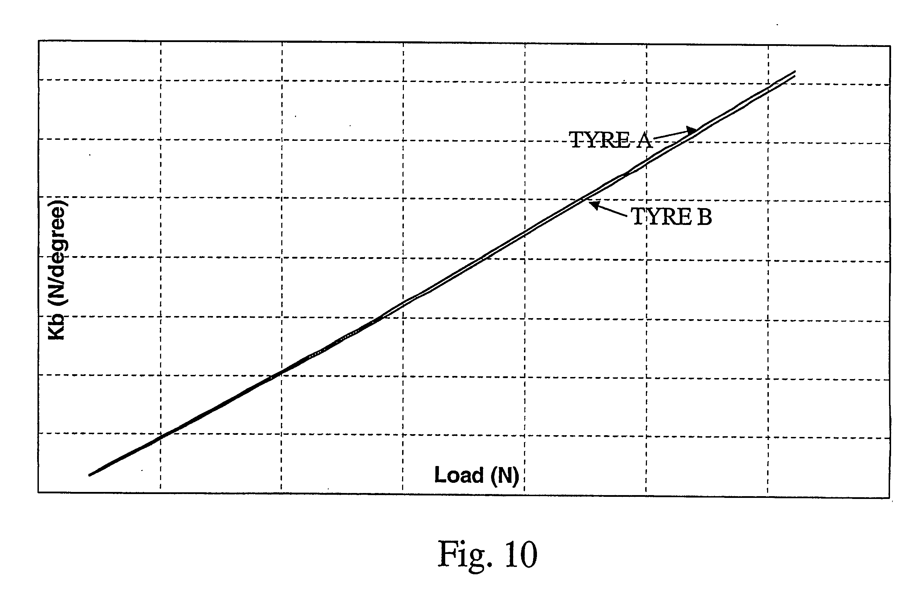

Figures 10, 11 and 12 show respectively the rigidity of the tyre tread kb, the rigidity of the tyre structure ks and the slip rigidity kd (measured in Newton/angle) with respect to the applied load (Newton).

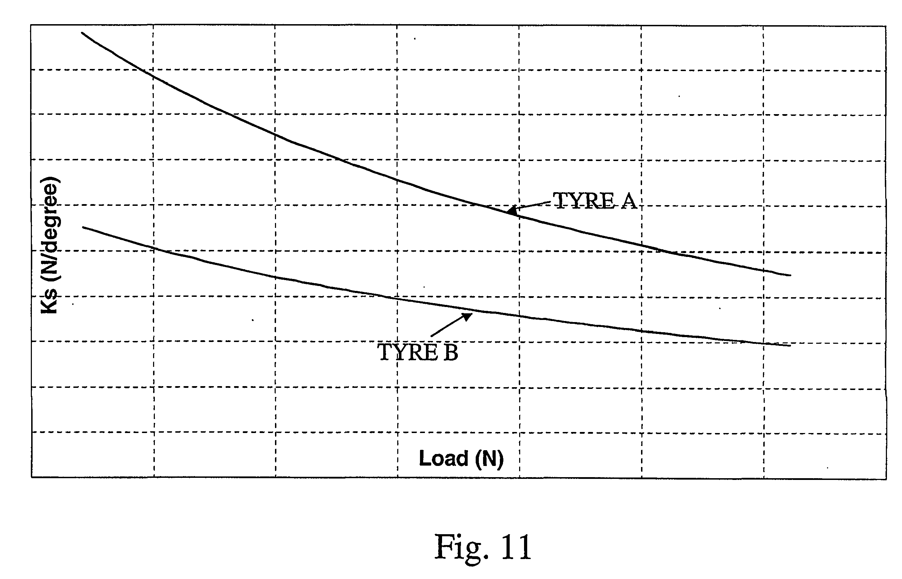

In details, Figure 10 shows that the rigidity of the tyre tread kb of tyre A is substantially equal to the rigidity of the tyre tread kb of tyre B, while Figure 11 shows that the rigidity of the tyre structure ks of tyre A is greater than the rigidity of the tyre structure ks of tyre B.

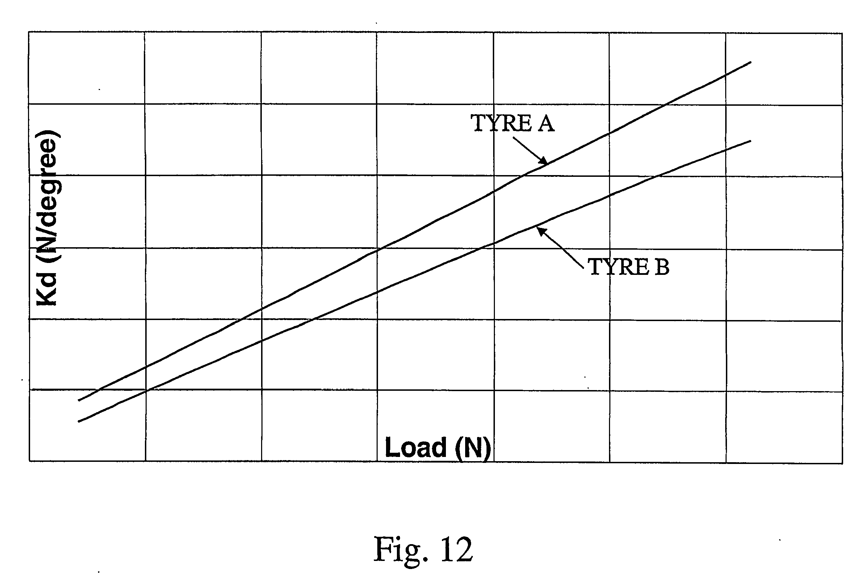

Therefore, Figure 12 shows that the slip rigidity kd, and thus the lateral grip, of tyre A is greater than the slip rigidity kd, and thus the lateral grip, of tyre B.

Outdoor testings

a) Handling

The handling tests were conducted on a track and the test driver simulated some characteristic manoeuvring (change of lane, entering a bend, leaving a bend, for example) carried out at constant speed, in acceleration and in deceleration. Then the test driver judged the tyre behaviour and assigned a score depending on the tyre performance during said manoeuvring.

The handling is generally divided into two voices (soft handling and hard handling) depending on the type of manoeuvre carried out by the test driver. The soft handling relates to the use of the tyre under normal running conditions, i.e. in conditions of normal speed and good transversal grip. On the contrary, the hard handling tests describe the behaviour of the tyre at the limit of adherence, i.e. under extreme driving conditions. In the latter case the test driver executes manoeuvres which an average driver might be forced to carry out in the case of unforeseen and hazardous circumstances: sharp steering at high speed, sudden changing of lanes to avoid obstacles, sudden braking and the like.

The vehicle used for the tests was a Ferrari 360 Modena fitted with tyres A of the invention and then with comparative tyres B. The tyres were fitted on standard rims and were inflated to the nominal operating pressure.

Two different types of tests were carried out: behaviour at normal speed (soft handling) and behaviour at the limit of adherence (hard handling).

As far as the soft handling tests were concerned, the test driver assessed: emptiness in the centre, that is the delay and the degree of response of the vehicle to small steering angles; the promptness of response to the steering coming into a bend; the progressiveness of response to the steering travelling in a bend; centring in a bend, that is the tyre capacity to keep the vehicle on a bend with a constant radius without continuous steering corrections; realignment, that is the capacity of the tyre to allow the vehicle to return to a rectilinear trajectory at the exit of a bend with contained and dampened transverse oscillations.

As far as the hard handling tests were concerned, the test driver assessed: the force on the steering wheel when turning violently; the promptness of insertion, that is the behaviour of the tyre in transition at the entrance of the bend taken at the limit speed; the balancing, that is the degree of oversteering or under-steering of the vehicle; the yield, that is the tyre capacity to absorb a strong fast transfer of the load as a consequence of a sudden change of lane without excessive deformation, and therefore without compromising vehicle stability and controllability; release in a bend, that is the tyre capacity to dampen the effects of instability resulting from the sudden release of the accelerator during a bend taken at the limit speed; controllability, that is the tyre capacity to maintain and/or return the vehicle to the trajectory after the loss of adherence.

Table 2 sums up the test driver's score sheet for the tyres controllability. The results of said tests are expressed by means of an evaluation scale representing the subjective opinion expressed by the test driver through a point system.

The values reproduced in the following table represent a mean value between those obtained in several test sessions (5 - 6 tests, for example) and given by several test drivers. It should be noted that the scale of values runs from a minimum of 4 to a maximum of 9.

Table 2

|  |  | Tyre A (invention) | Tyre B (comparative) |
| --- | --- | --- | --- |
| Steering behaviour (Soft handling) | Emptiness at the centre | 7 | 6.5 |
|  | Promptness | 7.0 | 6.0 |
|  | Progressiveness | 7.0 | 6.0 |
|  | Centring in bend | 7.5 | 6.0 |
|  | Realignment | 7.5 | 6.5 |
|  |  |  |  |

(continued)

|  |  | Tyre A (invention) | Tyre B (comparative) |
|---|---|---|---|
| Behaviour at limit (Hard handling) | Promptness of insertion | 7.0 | 6.5 |
|  | Balancing | 7.0 | 6.0 |
|  | Yield | 7.0 | 6.0 |
|  | Release in bend | 7.5 | 6.5 |
|  | Understeering | 7.0 | 6.5 |
|  | Oversteering | 7.5 | 6.5 |
|  | Controllability | 7.5 | 6.5 |

As it can be seen from Table 2, the tyre according to the invention has notably better characteristics compared with the comparative tyre.

For instance, the tyre of the present invention has high promptness and road holding (especially when the tyre is mounted on the steering axle) which is derivable from the items promptness, progressiveness, centering in bend and understeering.

Furthermore, the tyre of the present invention has high lateral grip which is derivable from the items realignment, oversteering, controllability and yield.

The tyre of the invention succeeds in providing a high equilibrium between the two vehicle axes and thus a better balancing of the front and the rear of the vehicle.

**Claims**

1. Pneumatic tyre (10; 30; 50; 60), comprising:

   - a pair of axially spaced apart annular reinforcing elements (14; 33);
   - a carcass structure (11; 31) comprising at least one carcass ply (12, 13; 32; 51, 52) extending between said annular reinforcing elements (14; 33) and secured at axially opposite end portions (32a) to a respective one of said annular reinforcing elements (14; 33), each axial end portion (32a) being turned up around said annular reinforcing elements (14; 33);
   - a pair of bead fillers (16; 34), each of said bead fillers (16; 34) being located radially outward of the respective annular reinforcing element (14; 33);
   - at least one flipper (17; 40) at least partially enveloping the respective annular reinforcing element (14; 33) and bead filler (16; 34), said flipper (17; 40) comprising a plurality of mutually substantially parallel elongated reinforcing elements;
   - a tread band (18; 39) extending circumferentially around said carcass structure (11; 31);
   - a belt structure (20; 36) circumferentially located between said carcass structure (11; 31) and said tread band (18; 39); and
   - at least one pair of sidewalls (19; 38) applied to said carcass structure (11; 31) in axially opposite positions,

   **characterized in that** said elongated reinforcing elements of the flipper are metallic cords comprising a plurality of threadlike elements, at least one of the threadlike elements is a preformed threadlike metallic element (200) having a diameter in the range of from 0.05 mm to 0.25 mm.

2. Tyre (10; 30; 50; 60) according to Claim 1, in which the threadlike elements (200) of said elongated reinforcing elements are all preformed.

3. Tyre (10; 30; 50; 60) according to Claim 1, in which said at least one threadlike element (200) is preformed with a deformation of the coplanar type.

4. Tyre (10; 30; 50; 60) according to Claim 3, in which said at least one threadlike element (200) is preformed so as to have a form of the undulating type.

5. Tyre (10; 30; 50; 60) according to Claim 4, in which said undulating form is of a substantially sinusoidal type.

**6.** Tyre (10; 30; 50; 60) according to Claim 5, in which said substantially sinusoidal form has a wavelength (P) of between 2.5 mm and 30 mm.

**7.** Tyre (10; 30; 50; 60) according to Claim 5, in which said substantially sinusoidal form has a wave amplitude (H) of between 0.12 mm and 1 mm.

**8.** Tyre (10; 30; 50; 60) according to Claim 4, in which said undulating form is of the helical type.

**9.** Tyre (10; 30; 50; 60) according to Claim 1, in which said flipper (17; 40) comprises a central portion (171), contacting the respective annular reinforcing element (14; 33), and two leg portions (172, 173), extending from the respective ends of the central portion (171) and engaging the bead filler (16; 34).

**10.** Tyre (10; 30; 50; 60) according to Claim 1, in which the flipper ends (174, 175) are offset from each other.

**11.** Tyre (50; 60) according to Claim 1, further comprising a chafer (53) which comprises a plurality of substantially parallel metallic elongated reinforcing elements.

**12.** Tyre (50; 60) according to Claim 11, in which said elongated reinforcing elements comprise at least one preformed threadlike element (200) having a diameter in the range from 0.05 mm to 0.25 mm.

**13.** Tyre (50; 60) according to Claim 11, in which said at least one threadlike element (200) of said elongated reinforcing elements are all preformed.

**14.** Tyre (50; 60) according to Claim 12, in which said at least one threadlike element (200) is preformed with a deformation of the coplanar type.

**15.** Tyre (50; 60) according to Claim 12, in which said at least one threadlike element (200) is preformed so as to have a form of the undulating type.

**16.** Tyre (50; 60) according to Claim 15, in which said undulating form is of a substantially sinusoidal type.

**17.** Tyre (50; 60) according to Claim 16, in which said substantially sinusoidal form has a wavelength (P) of between 2.5 mm and 30 mm.

**18.** Tyre (50; 60) according to Claim 16, in which said substantially sinusoidal form has a wave amplitude (H) of between 0.12 mm and 1 mm.

**19.** Tyre (50; 60) according to Claim 15, in which said undulating form is of the helical type.

**20.** Tyre (50; 60) according to Claim 11, in which the chafer (53) is located between the flipper (17; 40) and the at least one carcass ply (51, 52).

**21.** Tyre (50; 60) according to Claim 11, in which the chafer (53) is located axially external with respect to the at least one carcass ply (51, 52).

**22.** Tyre (50; 60) according to Claim 11, in which the chafer (53) is located axially internal with respect to the at least one carcass ply (51, 52).

**23.** Tyre (50; 60) according to Claim 11, in which the chafer (53) is located between two carcass plies (51, 52).

**24.** Tyre (10; 30; 50; 60) according to Claim 1 or 11, in which said at least one metallic threadlike element (200) consists of a metal comprising: steel, aluminium or an aluminium alloy.

**25.** Tyre (10; 30; 50; 60) according to Claim 1 or 11, in which said at least one metallic threadlike element (200) has a coating chosen from the group comprising: brass, zinc, zinc/manganese alloys, zinc/cobalt alloys, zinc/cobalt/manganese alloys.

**26.** Tyre (10; 30; 50; 60) according to Claim 1 or 11, in which the number of the metallic threadlike elements (200) is between 2 and 5.

27. Tyre (10; 30; 50; 60) according to Claim 1 or 11, in which the stranding pitch of the metallic threadlike elements (200) is between 2.5 mm and 25 mm.

28. Tyre (10; 30; 50; 60) according to Claim 1 or 11, in which the density of the elongated reinforcing elements is comprised between 40 cords/dm and 160 cords/dm.

29. Tyre (10; 30; 50; 60) according to Claim 1, in which the elongated reinforcing elements are disposed at an angle relative to a radial plane of the tyre in the range of 15° to 60°.

30. Tyre (10; 30; 50; 60) according to Claim 11, in which the elongated reinforcing elements are disposed at an angle relative to a radial plane of the tyre in the range of 15° to 70°.

**Patentansprüche**

1. Luftreifen (10; 30; 50; 60)

- mit einem Paar von axial beabstandeten ringförmigen Verstärkungselementen (14; 33),
- mit einem Karkassenaufbau (11; 31), der wenigstens eine Karkassenlage (12, 13; 32; 51, 52) aufweist, die sich zwischen den ringförmigen Verstärkungselementen (14; 33) erstreckt und an axial gegenüberliegenden Endabschnitten (32a) an dem entsprechenden ringförmigen Verstärkungselement (14; 33) festgelegt ist, wobei jeder axiale Endabschnitt (32a) um die ringförmigen Verstärkungselemente (14; 33) nach oben umgeschlagen ist,
- mit einem Paar von Wulstfüllern (16; 34), von denen jeder radial außerhalb von dem jeweiligen ringförmigen Verstärkungselement (14; 33) angeordnet ist,
- mit wenigstens einer Wulstfahne (17; 40), die das jeweilige ringförmige Verstärkungselement (14; 33) und den Wulstfüller (16; 34) wenigstens teilweise umhüllt und eine Vielzahl von zueinander im Wesentlichen parallelen langgestreckten verstärkenden Elementen aufweist,
- mit einem Laufflächenband (18; 39), das sich am Umfang um den Karkassenaufbau (11; 31) herum erstreckt,
- mit einem Gurtaufbau (20; 36), der am Umfang zwischen dem Karkassenaufbau (11; 31) und dem Laufflächenband (18; 39) angeordnet ist, und
- mit wenigstens einem Paar von Seitenwänden (19; 38), die an dem Karkassenaufbau (11; 31) in axial gegenüberliegenden Positionen aufgebracht sind,

**dadurch gekennzeichnet,**

- **dass** die langgestreckten verstärkenden Elemente der Wulstfahne metallische Korde sind, die eine Vielzahl von fadenförmigen Elementen aufweist, von denen wenigstens eines ein vorgeformtes fadenförmiges metallisches Element (200) mit einem Durchmesser im Bereich von 0,05 mm bis 0,25 mm ist.

2. Reifen (10; 30; 50; 60) nach Anspruch 1, bei welchem die fadenförmigen Elemente (200) der langgestreckten verstärkenden Elemente alle vorgeformt sind.

3. Reifen (10; 30; 50; 60) nach Anspruch 1, bei welchem das wenigstens eine fadenförmige Element (200) mit einer Verformung koplanarer Art vorgeformt ist.

4. Reifen (10; 30; 50; 60) nach Anspruch 3, bei welchem das wenigstens eine fadenförmige Element (200) so vorgeformt ist, dass es eine wellenartige Form hat.

5. Reifen (10; 30; 50; 60) nach Anspruch 4, bei welchem die wellenartige Form im Wesentlichen sinusartig ist.

6. Reifen (10; 30; 50; 60) nach Anspruch 5, bei welchem die im Wesentlichen sinusartige Form eine Wellenlänge (P) zwischen 2,5 mm und 30 mm hat.

7. Reifen (10; 30; 50; 60) nach Anspruch 5, bei welchem die im Wesentlichen sinusartige Form eine Wellenamplitude (H) zwischen 0,12 mm und 1 mm hat.

**8.** Reifen (10; 30; 50; 60) nach Anspruch 4, bei welchem die wellenartige Form helixartig ist.

**9.** Reifen (10; 30; 50; 60) nach Anspruch 1, bei welchem die Wulstfahne (17; 40) einen zentralen Abschnitt (171), der das jeweilige ringförmige Verstärkungselement (14; 33) berührt, und zwei Schenkelabschnitte (172, 173) hat, die sich von den jeweiligen Enden des zentralen Abschnitts (171) aus erstrecken und an dem Wulstfüller (16; 34) angreifen.

**10.** Reifen (10; 30; 50; 60) nach Anspruch 1, bei welchem die Wulstfahnenenden (174, 175) zueinander versetzt sind.

**11.** Reifen (50; 60) nach Anspruch 1, welcher weiterhin einen Wulstschutzstreifen (53) mit einer Vielzahl von im Wesentlichen parallelen metallischen langgestreckten verstärkenden Elementen aufweist.

**12.** Reifen (50; 60) nach Anspruch 11, bei welchem die langgestreckten verstärkenden Elemente wenigstens ein vorgeformtes fadenförmiges Element (200) mit einem Durchmesser im Bereich von 0,05 mm bis 0,25 mm aufweisen.

**13.** Reifen (50; 60) nach Anspruch 11, bei welchem das wenigstens eine fadenförmige Element (200) der langgestreckten verstärkenden Elemente vorgeformt ist.

**14.** Reifen (50; 60) nach Anspruch 12, bei welchem das wenigstens eine fadenförmige Element (200) mit einer Verformung koplanarer Art vorgeformt ist.

**15.** Reifen (50; 60) nach Anspruch 12, bei welchem das wenigstens eine fadenförmige Element (200) so vorgeformt ist, dass es eine wellenartige Form hat.

**16.** Reifen (50; 60) nach Anspruch 15, bei welchem die wellenartige Form im Wesentlichen sinusartig ist.

**17.** Reifen (50; 60) nach Anspruch 16, bei welchem die im Wesentlichen sinusartige Form eine Wellenlänge (P) zwischen 2,5 mm und 30 mm hat.

**18.** Reifen (50; 60) nach Anspruch 16, bei welchem die im Wesentlichen sinusartige Form eine Wellenamplitude (H) zwischen 0,12 mm und 1 mm hat.

**19.** Reifen (50; 60) nach Anspruch 15, bei welchem die wellenartige Form helixartig ist.

**20.** Reifen (50; 60) nach Anspruch 11, bei welchem der Wulstschutzstreifen (53) zwischen der Wulstfahne (17; 40) und der wenigstens einen Karkassenlage (51, 52) angeordnet ist.

**21.** Reifen (50; 60) nach Anspruch 11, bei welchem der Wulstschutzstreifen (53) bezogen auf die wenigstens eine Karkassenlage (51, 52) axial außerhalb angeordnet ist.

**22.** Reifen (50; 60) nach Anspruch 11, bei welchem der Wulstschutzstreifen (53) bezogen auf die wenigstens eine Karkassenlage (51, 52) axial innerhalb angeordnet ist.

**23.** Reifen (50; 60) nach Anspruch 11, bei welchem der Wulstschutzstreifen (53) zwischen zwei Karkassenlagen (51, 52) angeordnet ist.

**24.** Reifen (10; 30; 50; 60) nach Anspruch 1 oder 11, bei welchem das wenigstens eine metallische fadenförmige Element (200) aus einem Metall besteht, das Stahl, Aluminium oder eine Aluminiumlegierung aufweist.

**25.** Reifen (10; 30; 50; 60) nach Anspruch 1 oder 11, bei welchem das wenigstens eine metallische fadenförmige Element (200) einen Überzug hat, der aus der Gruppe ausgewählt wird, die Messing, Zink, Zink-Manganlegierungen, Zink-Kobaltlegierungen und Zink-Kobalt-Manganlegierungen aufweist.

**26.** Reifen (10; 30; 50; 60) nach Anspruch 1 oder 11, bei welchem die Anzahl der metallischen fadenförmigen Elemente (200) zwischen zwei und fünf liegt.

**27.** Reifen (10; 30; 50; 60) nach Anspruch 1 oder 11, bei welchem die Verlitzungsganghöhe der metallischen fadenförmigen Elemente (200) zwischen 2,5 mm und 25 mm liegt.

**28.** Reifen (10; 30; 50; 60) nach Anspruch 1 oder 11, bei welchem die Dichte der langgestreckten verstärkenden Elemente zwischen 40 Korden/dm und 160 Korden/dm liegt.

**29.** Reifen (10; 30; 50; 60) nach Anspruch 1, bei welchem die langgestreckten verstärkenden Elemente bezogen auf eine Radialebene des Reifens mit einem Winkel im Bereich von 15° bis 60° angeordnet sind.

**30.** Reifen (10; 30; 50; 60) nach Anspruch 11, bei welchem die langgestreckten verstärkenden Elemente bezogen auf eine Radialebene des Reifens mit einem Winkel im Bereich von 15° bis 70° angeordnet sind.

**Revendications**

**1.** Pneumatique (10; 30; 50; 60) comprenant :

une paire d'éléments de renfort annulaires axialement espacés (14; 33) ;
une structure de carcasse (11; 31) comprenant au moins un pli de carcasse (12, 13; 32; 51, 52), s'étendant entre lesdits éléments de renfort annulaires (14; 33) et fixée dans des parties d'extrémité axialement opposées (32a) à un élément respectif desdits éléments de renfort annulaires (14; 33), chaque partie d'extrémité axiale (32a) étant relevée autour desdits éléments de renfort annulaires (14; 33) ;
une paire de charges de talon (16; 34), chacune desdites charges de talon (16; 34) étant disposée radialement vers l'extérieur de l'élément de renfort annulaire respectif (14; 33) ;
au moins une bandelette (17; 40) enveloppant au moins partiellement l'élément de renfort annulaire respectif (14; 33) et la charge de talon (16; 34), ladite bandelette (17; 40) comprenant une pluralité d'éléments de renfort allongés sensiblement mutuellement parallèles ;
une bande de roulement (18; 39) s'étendant circonférentiellement autour de ladite structure de carcasse (11; 31);
une structure de ceinture (20; 36) disposée circonférentiellement entre ladite structure de carcasse (11; 31) et ladite bande de roulement (18; 39) ; et
au moins une paire de parois latérales (19; 38) appliquées sur ladite structure de carcasse (11; 31) dans des positions axialement opposées,

**caractérisé en ce que** lesdits éléments de renfort allongés de la bandelette sont des câbles métalliques comprenant une pluralité d'éléments filiformes, au moins l'un des éléments filiformes étant un élément métallique filiforme préformé (200) ayant un diamètre situé dans la plage allant de 0,05 mm à 0,25 mm.

**2.** Pneu (10; 30; 50; 60) selon la revendication 1, dans lequel les éléments filiformes (200) desdits éléments de renfort allongés sont tous préformés.

**3.** Pneu (10; 30; 50; 60) selon la revendication 1, dans lequel ledit au moins un élément filiforme (200) est préformé avec une déformation de type coplanaire.

**4.** Pneu (10; 30; 50; 60) selon la revendication 3, dans lequel ledit au moins un élément filiforme (200) est préformé de manière à avoir une forme de type ondulé.

**5.** Pneu (10; 30; 50; 60) selon la revendication 4, dans lequel ladite forme ondulée est de type sensiblement sinusoïdal.

**6.** Pneu (10; 30; 50; 60) selon la revendication 5, dans lequel ladite forme sensiblement sinusoïdale a une longueur d'onde (P) comprise entre 2,5 mm et 30 mm.

**7.** Pneu (10; 30; 50; 60) selon la revendication 5, dans lequel ladite forme sensiblement sinusoïdale a une amplitude d'onde (H) comprise entre 0,12 mm et 1 mm.

**8.** Pneu (10; 30; 50; 60) selon la revendication 4, dans lequel ladite forme ondulée est de type hélicoïdal.

**9.** Pneu (10; 30; 50; 60) selon la revendication 1, dans lequel ladite bandelette (17; 40) comprend une partie centrale (171) en contact avec l'élément de renfort annulaire respectif (14; 33) et deux parties de patte (172, 173), s'étendant à partir des extrémités respectives de la partie centrale (171) et en prise avec la charge de talon (16; 34).

**10.** Pneu (10; 30; 50; 60) selon la revendication 1, dans lequel les extrémités des bandelettes (174, 175) sont décalées l'une par rapport à l'autre.

**11.** Pneu (50; 60) selon la revendication 1, comprenant en outre une bandelette-talon (53) comprenant une pluralité d'éléments métalliques de renfort allongés sensiblement parallèles.

**12.** Pneu (50; 60) selon la revendication 11, dans lequel lesdits éléments de renfort allongés comprennent au moins un élément filiforme préformé (200) ayant un diamètre situé dans la plage allant de 0,05 mm à 0,25 mm.

**13.** Pneu (50; 60) selon la revendication 11, dans lequel ledit au moins un élément filiforme (200) desdits éléments de renfort allongés sont tous préformés.

**14.** Pneu (50; 60) selon la revendication 12, dans lequel ledit au moins un élément filiforme (200) est préformé avec une déformation de type coplanaire.

**15.** Pneu (50; 60) selon la revendication 12, dans lequel ledit au moins un élément filiforme (200) est préformé de manière à avoir une forme de type ondulé.

**16.** Pneu (50; 60) selon la revendication 15, dans lequel ladite forme ondulée est de type sensiblement sinusoïdal.

**17.** Pneu (50; 60) selon la revendication 16, dans lequel ladite forme sensiblement sinusoïdale a une longueur d'onde (P) comprise entre 2,5 mm et 30 mm.

**18.** Pneu (50; 60) selon la revendication 16, dans lequel ladite forme sensiblement sinusoïdale a une amplitude d'onde (H) comprise entre 0,12 mm et 1 mm.

**19.** Pneu (50; 60) selon la revendication 15, dans lequel ladite forme ondulée est de type hélicoïdal.

**20.** Pneu (50; 60) selon la revendication 11, dans lequel la bandelette-talon (53) est située entre la bandelette (17; 40) et l'au moins un pli de carcasse (51, 52).

**21.** Pneu (50; 60) selon la revendication 11, dans lequel la bandelette-talon (53) est disposée de manière axialement extérieure par rapport à l'au moins un pli de carcasse (51, 52).

**22.** Pneu (50; 60) selon la revendication 11, dans lequel la bandelette-talon (53) est disposée de manière axialement intérieure par rapport à l'au moins un pli de carcasse (51, 52).

**23.** Pneu (50; 60) selon la revendication 11, dans lequel la bandelette-talon (53) est disposée entre deux plis de carcasse (51, 52).

**24.** Pneu (10; 30; 50; 60) selon la revendication 1 ou 11, dans lequel ledit au moins un élément métallique filiforme (200) est constitué d'un métal comprenant : de l'acier, de l'aluminium ou un alliage d'aluminium.

**25.** Pneu (10; 30; 50; 60) selon la revendication 1 ou 11, dans lequel ledit au moins un élément métallique filiforme (200) comporte un revêtement choisi dans le groupe comprenant : le laiton, le zinc, des alliages zinc/manganèse, des alliages zinc/cobalt, des alliages zinc/cobalt/manganèse.

**26.** Pneu (10; 30; 50; 60) selon la revendication 1 ou 11, dans lequel le nombre d'éléments filiformes métalliques (200) est compris entre 2 et 5.

**27.** Pneu (10; 30; 50; 60) selon la revendication 1 ou 11, dans lequel l'espacement entre brins des éléments filiformes métalliques (200) est compris entre 2,5 mm et 25 mm.

**28.** Pneu (10; 30; 50; 60) selon la revendication 1 ou 11, dans lequel la densité des éléments de renfort allongés est comprise entre 40 câbles/dm et 160 câbles/dm.

**29.** Pneu (10; 30; 50; 60) selon la revendication 1, dans lequel les éléments de renfort allongés sont disposés selon un angle par rapport au plan radial du pneu situé dans la plage allant de 15° à 60°.

**30.** Pneu (10; 30; 50; 60) selon la revendication 11, dans lequel les éléments de renfort allongés sont disposés selon un angle par rapport au plan radial du pneu situé dans la plage allant de 15° à 70°.

Fig. 1

# Fig. 2

Fig. 3

Fig. 4

60

51

52

53

## Fig. 5

## Fig. 6

# Fig. 7

EP 1 648 720 B1

Fig. 8

Fig. 9

Fig. 10

EP 1 648 720 B1

Fig. 11

EP 1 648 720 B1

Fig. 12

EP 1 648 720 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030034108 A
- US 20010018941 A
- US 4319621 A
- US 5581990 A
- WO 0039385 A
- EP 461646 A